# NEUE EUROPÄISCHE PATENTSCHRIFT

(11) **EP 1 869 984 B2**
(45) Veröffentlichungstag und Bekanntmachung des Hinweises auf die Entscheidung über den Einspruch: **28.12.2016**
(45) Hinweis auf die Patenterteilung: 16.09.2009
(21) Anmeldenummer: 06012917.8
(22) Anmeldetag: 23.06.2006
(51) Int. Cl.: A23C 9/142, A23C 9/144, A23C 9/146, A23C 1/00, C13K 5/00, A23C 1/12

(54) **Verfahren zur Herstellung von Laktose aus Molke**
Process for the preparation of lactose from whey
Procédé de préparation de lactose à partir de lactosérum

(43) Veröffentlichungstag der Anmeldung: 26.12.2007
(73) Patentinhaber: Molkerei Alois Müller GmbH & Co. KG, 86850 Aretsried (DE)
(72) Erfinder: Cloidt, Roland, 01454 Radeberg (DE); Lehmann, Hanno, 59846 Sundern (DE)
(74) Vertreter: Leinweber & Zimmermann

(56) Entgegenhaltungen:
- EP-A2- 0 249 368
- WO-A-2004/022789
- DE-A1- 4 113 836
- FR-A1- 2 493 679
- CARIC, MARIJANA: "Concentrated and dried dairy products" 1991, VCH PUBLISHERS , USA, PAGES 227-234 , XP002410105 * Seite 229, Absatz 2 - Seite 232, Absatz 3 * * Seite 233, Absatz 2 - Seite 234, Absatz 6 *

## Beschreibung

Die Erfindung betrifft ein Verfahren zur Herstellung von Lactose aus Molke nach dem Oberbegriff des Anspruchs 1.

Bei der Herstellung von Lactose aus Molke entsteht als Koppelprodukt ein teilentzuckertes Molkenpermeat. Dieses teilentzuckerte Permeat enthält ca. 20% Trockenmasse, davon 60 bis 75% Lactose, 15 bis 25% Mineralien, die sogenannte Asche, und 5 bis 15% Proteine sowie in geringen Mengen sonstige Molkeninhaltsstoffe.

Caric, Marijana: "Concentrated and dried dairy products" 1991, VCH PUBLISHERS, U.S.A., pages 227-234, XP002410105, und FR-A1-2 493 679, offenbaren Verfahren zur Herstellung von Laktose aus Molke, bei dem Waschwasser bzw. ein Teil des teilentzuckerten Molkenpermeats dem eingedampften Laktosekonzentrat wieder zugeführt wird.

EP-A3-0 249 368, WO2004/022789 A offenbaren Verfahren zur Herstellung von Laktose aus Molke.

DE 41 13 836 A1 offenbart ein Verfahren zur Aufarbeitung von Süßmolkenpermeat und der Gewinnung von Laktose.

Der Erfindung liegt die Aufgabe zugrunde, das gattungsgemäße Verfahren dahingehend weiterzubilden, daß die Lactoseausbeute erhöht wird und gleichzeitig der Anfall an teilentzuckertem Permeat abnimmt.

Erfindungsgemäß wird diese Aufgabe durch den kennzeichnenden Teil des Anspruchs gelöst.

Durch die Rückführung eines Teils des teilentzuckerten Permeates vor dem Verfahrensschritt des Eindampfens kann die darin enthaltene Lactose zumindest teilweise der produzierten Laktose zugeführt werden. Die Menge an rezirkuliertem teilentzuckertem Permeat kann dadurch erhöht werden, dass dem teilentzuckerten Permeat vor der Rezirkulation durch ein Membrantrennverfahren oder eine Elektrodialyse/lonenaustauscher Mineralien entzogen werden.

Zur Verringerung des Mineralanteils in dem teilentzuckertem Permeat und im fertigen Lactosepulver ist in weiterer Ausbildung der Erfindung vorgesehen, dass dem Laktosekonzentrat vor dem Eindampfen durch Ausfällen und mechanische Abtrennung Kalziumphosphat entzogen wird. Da die Kristallisation der Lactose neben der Trockenmasse des Laktosekonzentrates und dem Laktosegehalt im Konzentrat auch vom Mineralgehalt (Asche) und von der Zusammensetzung der Asche abhängt, wird durch das Ausfällen und mechanisches Abtrennen von Kalziumphosphat aus dem Laktosekonzentrat die Kristallisation beeinflusst.

Die für eine optimale Kristallisation der Laktose notwendige Ausgewogenheit von Trockenmasse, Laktosegehalt und Vorhandensein/Abwesenheit der wesentlichen Mineralien der Molke wird durch die Entfernung von Kalzium und Phosphat und durch die Rezirkulation von teilentzuckertem, teilentmineralisiertem Permeat hergestellt.

Ein Ausführungsbeispiel der Erfindung wird nachfolgend näher erläutert.

In der einzigen Figur der Zeichnung sind die einzelnen Schritte eines Verfahrens zur Herstellung von Laktose aus Molke schematisch dargestellt und entsprechend ihrer zeitlichen Reihenfolge fortlaufend nummeriert.

Der als Ausgangsstoff dienenden Molke, die beispielsweise bei der Herstellung von Käse anfällt, wird in einem ersten Verfahrensschritt durch Ultrafiltration Eiweiß entzogen. Dem so gewonnenen Permeat wird sodann in einem zweiten Verfahrensschritt durch ein Membrantrennverfahren Wasser entzogen. Das dadurch gewonnene Retentat kann in einem Tank zwischengelagert werden. In einem dritten Verfahrensschritt wird der pH-Wert im Laktosekonzentrat durch Zugabe von Natronlauge (NaOH) eingestellt, das so behandelte Laktosekonzentrat erhitzt und heißgehalten, wodurch das in dem Laktosekonzentrat enthaltene Kalziumphosphat (Ca₂(PO₃)⁴) ausgefällt wird. Der dritte Verfahrensschritt umfaßt auch das mechanische Abtrennen des ausgefällten Kalziumphosphats. Die Ausfällung und die mechanische Abtrennung von Kalziumphosphat ist aus zwei Gründen vorgesehen. Einerseits wird die weitere Verarbeitung des Laktosekonzentrates durch das Kalzium beeinträchtigt und andererseits ist Kalziumphosphat bei entsprechender Reinheit ein Handelsprodukt.

In einem vierten Verfahrensschritt wird die Konzentration des so behandelten Konzentrates durch Eindampfen auf mindestens 60% Trockenmasse erhöht. Die in dem Konzentrat enthaltene Lactose wird anschließend in einem fünften Verfahrensschritt kristallisiert. Die kristalline Laktose wird in einem sechsten Verfahrensschritt in einer mehrstufigen Wasch - und Dekantier Anlage gewaschen und weiter aufkonzentriert. Das gewaschene Lactosekonzentrat mit einem Gehalt von >90% Trockenmasse wird sodann in einem siebten Verfahrensschritt getrocknet, so daß ein Lactosepulver mit >99% Trockenmasse erhalten wird.

Das beim Waschen und Konzentrieren des Laktosekonzentrats entstehende teilentzuckerte Permeat enthält ca. 20% Trockenmasse, die ihrerseits aus 60 bis 70% Laktose besteht. 30 - 60% der bei der Ausführung des sechsten Verfahrensschrittes aus der mehrstufigen Wasch - und Dekantier Anlage abgezogenen teilentzuckerten Permeates wird rezirkuliert und dem Laktosekonzentrat vor dem vierten Verfahrensschritt, dem Eindampfen, wieder zugeführt. Wegen des hohen Mineralgehaltes des teilentzuckerten Permeates kann nur ein Teil rezirkuliert werden, da andernfalls die Kristallisation und die Qualität des Laktosepulvers negativ beeinflusst würde und die Gesamtausbeute sich vom Optimum entfernen würde. Um die Rezirkulationsmenge zu erhöhen, kann der Mineralgehalt im teilentzuckerten Permeat über eine Membranfiltrationsanlage oder eine Elektrodialyse/lonenaustauscher reduziert werden.

Die Gesamtausbeute der Laktoseherstellung besteht aus der standardmäßig gewonnenen Laktose bezogen auf den der Anlage zugeführten Rohstoff und aus dem Anteil Laktose, der aus dem rezirkulierten Anteil des teilentzuckerten Permeates gewonnen wurde.

## Patentansprüche

1. Verfahren zur Herstellung von Laktose aus Molke, bei dem der Molke durch Ultrafiltration Eiweiß entzogen wird, dem so gewonnenen Permeat durch ein Membrantrennverfahren Wasser entzogen wird, die Konzentration des so gewonnenen Laktosekonzentrates durch Eindampfen auf mindestens 60% Trockenmasse erhöht wird, die in dem Konzentrat enthaltene Laktose auskristallisiert wird, das kristallisierte Laktosekonzentrat in einer Wasch- und Konzentrationsstufe weiter aufkonzentriert und gereinigt wird und das dabei entstehende teilentzukkerte Permeat abgeschieden wird, und das verbleibende Laktosekonzentrat getrocknet wird, wobei ein Teil des aus dem Laktosekonzentrat abgeschiedenen teilentzuckerten Permeates bei dem kontinuierlich durchgeführten Herstellungsprozess dem Laktosekonzentrat wieder zugeführt wird,
**dadurch gekennzeichnet, dass**
die Wiederzuführung vor dem Schritt des Eindampfens erfolgt.

2. Verfahren nach Anspruch 1, **dadurch gekennzeichnet, dass** dem Laktosekonzentrat vor dem Eindampfen durch Ausfällen und mechanische Abtrennung Kalziumphosphat entzogen wird.

3. Verfahren nach Anspruch 1, **dadurch gekennzeichnet, dass** dem teilentzuckerten Permeat vor der Rezirkulation durch ein Membrantrennverfahren oder eine Elektrodialyse oder ein ionenaustauschverfahren Mineralien entzogen werden.

## Claims

1. A method of producing lactose from whey, wherein albumen is extracted from the whey by means of ultrafiltration, water is extracted from the permeate thus obtained by means of a membrane separation method, the concentration of the lactose concentrate thus obtained is increased by evaporating at least 60 % of the dry mass, the lactose contained within the concentrate is crystallised out, the crystallised lactose concentrate is further concentrated and purified in a washing and concentration stage, and the partially desugared permeate produced here is separated, and the remaining lactose concentrate is dried, part of the partially desugared permeate separated from the lactose concentrate being re-introduced to the lactose concentrate with the continuously implemented production process,
**characterised in that**
the re-introduction takes place before the evaporation step.

2. The method according to Claim 1, **characterised in that** calcium phosphate is extracted from the lactose concentrate before the evaporation by means of precipitation and mechanical separation.

3. The method according to Claim 1, **characterised in that** minerals are extracted from the partially desugared permeate before recirculation by means of a membrane separation method or electrodialysis or an ion exchange method.

## Revendications

1. Procédé de fabrication de lactose à partir de lactosérum, dans lequel les protéines sont extraites du petit-lait par ultrafiltration, l'eau du perméat ainsi obtenu est extraite selon un procédé de séparation membranaire, la concentration du concentré en lactose ainsi obtenu sera portée par évaporation à au moins 60 % de matière sèche, le lactose contenu dans le concentré est cristallisé, le concentré en lactose cristallisé est re-concentré et purifié au cours d'une étape de purification et de concentration et le perméat ainsi produit subit une extraction partielle de son sucre, et le concentré en lactose restant est séché, une partie du perméat, partiellement dépourvu de son sucre, qui a été séparé du concentré en lactose est réintroduite dans le concentré en lactose dans le cadre du procédé de fabrication mis en oeuvre de façon continue,
**caractérisé en ce que**
la réintroduction s'effectue préalablement à l'étape d'évaporation.

2. Procédé selon la revendication 1, **caractérisé en ce que** le phosphate de calcium est extrait du concentré en lactose, avant l'étape d'évaporation, par précipitation et séparation mécanique.

3. Procédé selon la revendication 1, **caractérisé en ce que** les minéraux du perméat partiellement dépourvu de sucre sont extraits avant la réintroduction selon un procédé de séparation membranaire, par électrodialyse ou selon un procédé d'échange d'ions.
